# EUROPÄISCHE PATENTSCHRIFT

(11) **EP 3 447 457 B1**
(45) Veröffentlichungstag und Bekanntmachung des Hinweises auf die Patenterteilung: **16.02.2022**
(21) Anmeldenummer: 18199829.5
(22) Anmeldetag: 27.05.2014
(51) Int. Cl.: G01G 21/28

(54) **GEHÄUSE FÜR EINE WÄGEVORRICHTUNG**
HOUSING FOR A WEIGHING DEVICE
BOÎTIER POUR UN DISPOSITIF DE PESAGE

(30) Priorität: 31.05.2013 DE 102013105647
(43) Veröffentlichungstag der Anmeldung: 27.02.2019
(62) Teilanmeldung aus: 14401066.7
(73) Patentinhaber: WIPOTEC GmbH, 67657 Kaiserslautern (DE)
(72) Erfinder: Rübel, Andreas, 67737 Olsbrücken (DE); Schulzki, Alexander, 67705 Stelzenberg (DE)
(74) Vertreter: Eder Schieschke & Partner mbB

(56) Entgegenhaltungen:
- JP-A- 2002 107 219

## Beschreibung

Die Erfindung betrifft ein Gehäuse für eine Wägevorrichtung.

Gehäuse für Wägevorrichtungen sind in vielfältiger Form bekannt. Bekannte Gehäuse für Wägevorrichtungen bestehen häufig aus einer Bodenplatte, auf welcher die Wägevorrichtung angeordnet ist. Die Wägevorrichtung kann beispielsweise einen Sensor umfassen, der nach dem Prinzip der elektromagnetischen Kraftkompensation arbeitet. Derartige Kraftsensoren weisen üblicherweise einen Roberval-Lenkermechanismus auf, der erforderlichenfalls mit einem oder mehreren Übersetzungshebeln verbunden ist. Die zu erfassende Lastkraft wirkt auf den beweglichen Teil des Roberval-Mechanismus, der mit dem ersten Übersetzungshebel verbunden ist. Am Ende des letzten Hebels ist eine Spule angeordnet, die in einem Magnetfeld auf einer konstanten Höhenposition gehalten wird. Hierzu wird die am letzten Hebel angeordnete Spule mit einem Strom beaufschlagt, der so geregelt wird, dass bei der aktuell wirkenden Lastkraft die vorbestimmte Höhenposition des letzten Hebels konstant gehalten wird. Damit ist der Wert des Stroms durch die Spule ein Maß für die detektierte Lastkraft. Sämtliche Komponenten, die zur Erfassung der Lastkraft erforderlich sind, also der Sensor, die Regelelektronik und gegebenenfalls eine Einrichtung zur Verarbeitung des oder der erfassten Messwerte, können auf der Bodenplatte des Gehäuses angeordnet sein. Das Gehäuse ist üblicherweise mittels eines Gehäuseoberteils, das die Oberseite der Bodenplatte abdeckt, zum Schutz gegen Umwelteinflüsse, wie insbesondere Staub und Feuchtigkeit, im Wesentlichen dicht ausgebildet.

Aus dem Gehäuse müssen jedoch einerseits ein Lastträgerarm und andererseits die Kontakte zur Abgabe der elektrischen bzw. elektronischen Messsignale herausgeführt sein. Der Lastträgerarm wird üblicherweise an der Oberseite bzw. Deckelseite des Gehäuses über einen Durchbruch herausgeführt. Der Durchbruch wird mittels einer Dichtung ebenfalls gegen Umwelteinflüsse abgedichtet. Als Dichtung kommen dabei insbesondere Labyrinthdichtungen in Frage, wobei ein erstes Dichtungsteil im Durchbruch des Gehäuses oder, den Durchbruch umgebend, an der Oberseite des Gehäuses angeordnet wird. Dieses erste Dichtungsteil wird von dem Lastträgerarm möglichst berührungsfrei durchgriffen. Der Lastträgerarm ist in diesem Fall mit einem zweiten Dichtungsteil verbunden, welches zusammen mit dem ersten Dichtungsteil einen in einem vertikalen Schnitt labyrinthartigen Ringraum ausbildet. Hierdurch wird eine berührungsfreie und damit keinerlei Kraftnebenschluss bewirkende Abdichtung des Durchbruchs im Gehäuse zur Durchführung des Lastträgerarms erreicht.

Kabeldurchführungen oder Steckkontakte für das Übertragen der elektrischen Messsignale aus dem Gehäuse können an der Unterseite des Gehäuses, das heißt an der Unterseite der Bodenplatte, vorgesehen sein.

Solche aus einem Gehäuse und einer darin angeordneten Wägevorrichtung bestehende Einheiten werden im Rahmen der vorliegenden Beschreibung als Wägezellen bezeichnet.

Derartige Wägezellen werden häufig in komplexe Wägeeinrichtungen, beispielsweise Mehrspurwägevorrichtungen, eingebaut. Hierzu werden die Wägezellen üblicherweise mit ihrer Bodenplatte auf einem Maschinengestell der komplexen Wägeeinrichtung montiert.

Zur Abdichtung derartiger Gehäuse für Wägevorrichtungen, die aus einer Bodenplatte und einem topf- oder wannenförmigen Gehäuseoberteil bestehen, sind verschiedene Methoden bekannt.

Aus der JP 2002 107219 A ist eine Waage bekannt, bei der ein den Wägemechanismus abdeckendes Gehäuseoberteil indirekt an der Bodenplatte befestigt wird, indem zwei an der Bodenplatte angeordnete Rahmenelemente bis auf die Unetrseite der Gehäuseoberseite geführt werden, um das Gehäuse über geeignete Verschraubungen an den Rahmenelementen zu fixieren.

Der Erfindung liegt die Aufgabe zu Grunde, ein Gehäuse für eine Wägevorrichtung zu schaffen, bei dem der Innenraum des Gehäuses zwischen einer Bodenplatte und einem Gehäuseoberteil auf einfache Weise und langzeitstabil gegenüber der Umgebung abgedichtet ist. Gleichzeitig soll das Gehäuse auf einfache Weise mit der Bodenplatte verbunden werden.

Die Erfindung löst diese Aufgabe mit den Merkmalen des Patentanspruchs 1.

Das erfindungsgemäße Gehäuse für eine Wägevorrichtung, das mit einem Trägerelement verbindbar ist, weist eine Bodenplatte auf, auf der die Wägevorrichtung montierbar ist oder welche mit der Wägevorrichtung oder einer Komponente der Wägevorrichtung einstückig ausgebildet ist. An der Unterseite des Gehäuses ist ein umlaufendes elastisches Dichtelement angeordnet. Das Dichtelement ist so ausgebildet, dass ein umlaufender Ringspalt zwischen dem äußeren Umfangsbereich der Unterseite der Bodenplatte und der Oberfläche des Trägerelements bei einem Montieren des Gehäuses auf die Oberfläche mit einer definierten, auf die Unterseite der Bodenplatte und die Oberseite des Trägerelements wirkenden Anpresskraft abgedichtet wird. Damit sind Kabeldurchführungen durch die Bodenplatte in das Maschinengestell oder elektrische Kontakte, die an der Unterseite der Bodenplatte vorgesehen sind, im montierten Zustand von Gehäuse und Trägerelement gegen Umwelteinflüsse geschützt.

Das Dichtelement ist dabei so ausgebildet, dass es bei der Montage durch die Beaufschlagung mit der Anpresskraft zwischen der Unterseite der Bodenplatte und der Oberfläche des Trägerelements elastisch deformiert wird. Das Dichtelement besteht aus einem elastischen Material, beispielsweise aus einem elastischen Kunststoff, wie Silikon. Die Elastizität des Materials und die Geometrie des Dichtelements können dabei so aufeinander abgestimmt werden, dass eine ausreichende Dichtwirkung gewährleistet ist. Das Material des Dichtelements kann dem Anwendungsfall angepasst sein. Beispielsweise kann bei Anwendungsfällen im Lebensmittelbereich ein Material verwendet werden, das eine entsprechende Eignung oder Zulassung durch die zuständigen Behörden besitzt.

Des Weiteren kann ein magnetisch- und oder elektrisch leitendes Material für das Dichtungselement verwendet werden, um die Dichtung zusätzlich gegenüber elektromechanischen Strahlungen dicht zu gestalten und die elektromagnetische Verträglichkeit der im Gehäuse vorgesehene Wägevorrichtung bzw. der aus dem Gehäuse und der Wägevorrichtung bestehende Wägezelle, zumindest im montierten Zustand von Gehäuse und Trägerelement, zu gewährleisten.

Erfindungsgemäß ist zur Montage des Gehäuseoberteils ein Rahmen mit der Bodenplatte verbunden oder einstückig mit dieser ausgebildet. Das Gehäuseoberteil ist in diesem Fall mit dem Rahmen verbindbar, dass eine für die Dichtwirkung ausreichende Anpresskraft für das Anpressen der Stirnseite der Seitenwandung des Gehäuseoberteils gegen das Dichtelement erzeugbar ist.

Damit ergibt sich der Vorteil, dass ein relativ dünnwandiges Material für das Gehäuseoberteil verwendet werden kann. Die erforderliche Stabilität des Gehäuses wird im montierten Zustand durch den zusätzlichen Rahmen erreicht.

Weitere Ausführungsformen der Erfindung ergeben sich aus den Unteransprüchen. Die Erfindung wird nachfolgend anhand eines in der Zeichnung dargestellten Ausführungsbeispiels näher erläutert. In der Zeichnung zeigen
- Fig. 1: einen Schnitt durch die vertikale Längsmittelebene durch ein auf einem Trägerelement montiertes Gehäuse für eine Wägevorrichtung nach der Erfindung;
- Fig. 2: einen Schnitt entlang der Ebene A-A durch die Wägevorrichtung in Fig. 1.

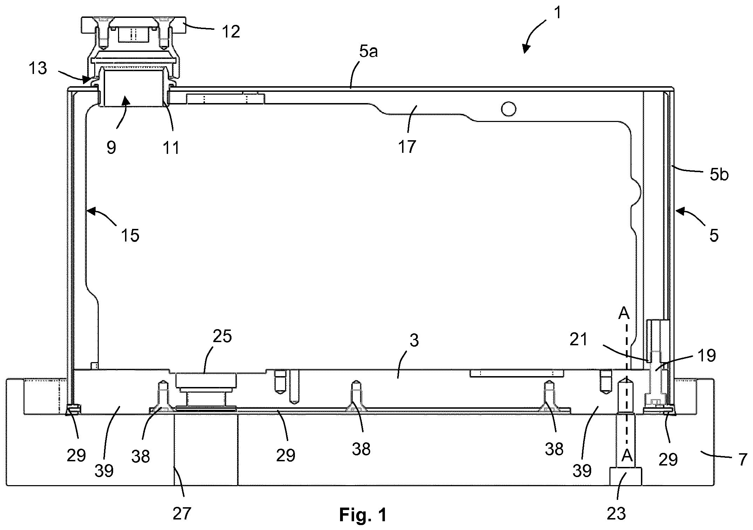

Das in Fig. 1 in einer geschnittenen Seitenansicht dargestellte Gehäuse 1 für eine nicht näher dargestellte Wägevorrichtung besteht aus einer Bodenplatte 3 und einem mit der Bodenplatte 3 verbundenen Gehäuseoberteil 5, welches eine Deckelwandung 5a und eine umlaufende Seitenwandung 5b aufweist. Das Gehäuseoberteil besitzt damit eine im Wesentlichen topfförmige oder wannenförmige Form. Dabei ist es selbstverständlich nicht erforderlich, dass das Gehäuse 5 bzw. das Gehäuseoberteil 5 eine im Wesentlichen quaderförmige Form aufweist, wie dies in Fig. 1 dargestellt ist. Die Bodenplatte muss auch nicht eine im Wesentlichen ebene Struktur aufweisen, sondern kann der Struktur eines Trägerelements 7 angepasst sein, auf dem das Gehäuse 1 montiert werden soll. Bei dem Trägerelement 7 kann es sich beispielsweise um ein Teil eines Maschinengestells einer komplexen Vorrichtung handeln, wie beispielsweise einer Mehrspurwägevorrichtung.

Auf der Bodenplatte 3 können in der Zeichnung nicht näher dargestellte Komponenten einer Wägevorrichtung angeordnet sein, beispielsweise ein elektromechanischer Kraftsensor zur Erfassung einer Lastkraft und weitere mechanische oder elektrische bzw. elektronische Komponenten, die beispielsweise zur Umsetzung der Lastkraft in ein elektrisches Signal bestimmt sind. Bei dem elektrischen Signal kann es sich um ein analoges Signal handeln oder auch um ein Signal, welches digitale Messwerte beinhaltet.

Die Bodenplatte 3 kann auch als integraler Bestandteil einer Komponente der Wägevorrichtung ausgebildet sein, insbesondere als Bestandteil des elektromechanischen Kraftsensors, der beispielsweise nach dem Prinzip der elektromagnetischen Kraftkompensation arbeiten kann.

Das Gehäuse 1 dient dabei dem Zweck, die im Gehäuseinneren vorhandenen Komponenten der Wägevorrichtung gegen Umwelteinflüsse, insbesondere Staub, Schmutz und Feuchtigkeit zu schützen.

Ein nicht näher dargestellter Lastträgerarm der Wägevorrichtung bzw. des Kraftsensors der Wägevorrichtung muss selbstverständlich aus dem Gehäuseinneren des Gehäuses 1 herausgeführt werden. Dies erfolgt über einen Durchbruch 9, der bei der in Fig. 1 dargestellten Ausführungsform des Gehäuses 1 in der Deckelwandung 5a des Gehäuseoberteils 5 ausgebildet ist.

In den Durchbruch 9 ist ein erstes Labyrinthdichtungsteil 11 eingesetzt, dessen oberer Bereich mit dem unteren Bereich eines zweiten Labyrinthdichtungsteils 12 zusammenwirkt, welches an dem nicht näher dargestellten Lastarm des Kraftsensors befestigt sein kann. Das zweite Labyrinthdichtungsteil umgreift mit seinem unteren Bereich den oberen Bereich des ersten Labyrinthdichtungsteils 11 berührungslos, um einen Kraftnebenschluss bei der Einleitung der zu erfassenden Lastkraft zu vermeiden. Zwischen dem unteren Bereich des zweiten Labyrinthdichtungsteils und dem oberen Bereich des ersten Labyrinthdichtungsteils ist somit ein im Querschnitt labyrinthartiger Ringraum 13 geschaffen, welcher das Eindringen von Staub, Schmutz oder übermäßiger Luftfeuchtigkeit in Form von Tröpfchen etc. in das Gehäuseinnere vermeidet oder zumindest reduziert.

An dieser Stelle sei erwähnt, dass der Lastarm auch an der Seitenwandung des Gehäuseüberteils herausgeführt sein kann. Im Gehäuse kann auch eine Wägevorrichtung mit mehreren Lastarmen angeordnet sein, die über einen oder mehrere Durchbrüche im Gehäuse nach außen geführt sein können. Der eine oder die mehreren Lastarme können auch über die Bodenplatte 3 nach außen geführt sein.

Auf der Bodenplatte 3 ist zur Befestigung und Stabilisierung des Gehäuseoberteils 5 ein Rahmen 15 angeordnet, der mehrere Streben oder Rippen 17 umfassen kann. Beispielsweise kann an jeder Längsseite der Bodenplatte 3 eine Strebe 17 vorgesehen sein. Zusätzlich können selbstverständlich auch zwischen den beiden äußeren Streben 17 ein oder mehrere Streben vorgesehen sein. Die längs verlaufenden Streben 17 können dabei durch weitere, quer verlaufende Streben (nicht dargestellt) verbunden sein.

Wie aus Fig. 1 ersichtlich, ist das Gehäuseoberteil 5 auf den Rahmen 15, diesen übergreifend, aufgesetzt. Das Gehäuseoberteil kann dabei durch eine Schraubverbindung über eine oder mehrere Schrauben, welche das Gehäuseoberteil durchgreifen und in jeweils eine Strebe 17 eingreifen, mit dem Rahmen verbunden werden.

Zusätzlich oder stattdessen kann das erste Labyrinthdichtungsteil 11 gleichzeitig als Montageteil zur Fixierung des Gehäuseoberteils 5 am Rahmen 15 dienen. Hierzu kann, wie in Fig. 1 dargestellt, der untere Bereich des im Wesentlichen zylindrischen ersten Labyrinthdichtungsteils 11 ein Gewinde aufweisen, welches in ein komplementäres Gewinde im Rahmen bzw. in der betreffenden Strebe 17 eingreift. Auf diese Weise wird das Gehäuseoberteil 5 mit seiner Deckelwandung 5a gegen die Oberseite der betreffenden Strebe gepresst. Damit erfährt das Gehäuseoberteil 5 eine vertikal wirkende Anpresskraft.

Der Rahmen 15 bzw. die Streben 17 können durch Schraubverbindung mit der Bodenplatte 3 verbunden sein. In Fig. 1 ist zur Verdeutlichung lediglich eine einzige Schraubverbindung dargestellt, wobei eine Schraube 19 die Bodenplatte 3 von unten durchgreift und in einen vertikal verlaufenden Teil einer zugeordneten Strebe 17 eingreift, die hierzu eine Bohrung 21 mit einem Innengewinde aufweist.

Zur Befestigung des Gehäuses 1 auf dem Trägerelement 7 kann ebenfalls eine Schraubverbindung vorgesehen sein. Von dieser ist in Fig. 1 ebenfalls nur eine einzige Schraube 23 schematisch dargestellt, welche das Trägerelement 7 von unten durchgreift und in eine Gewindebohrung in der Unterseite der Bodenplatte 3 eingreift.

Die in Fig. 1 dargestellte Bodenplatte 3 weist des Weiteren eine Steckverbindung 25 auf, die ebenfalls nur schematisch dargestellt ist. Die Steckverbindung 25 weist nicht näher dargestellte Kontakte auf, die mittels eines Steckers kontaktierbar sind, welche durch eine entsprechende Zugangsöffnung 27 zugänglich sind, die im Trägerelement 7 ausgebildet ist. Das Kontaktieren selbst kann selbstverständlich mittels eines Steckers oder anderer geeigneter Mittel erfolgen.

Die Bodenplatte 3 kann anstelle der Steckverbindung 25 oder zusätzlich zu der Steckverbindung 25 auch einen Durchbruch aufweisen, durch welchen entsprechende elektrische Leitungen in das Gehäuseinnere geführt werden können.

Um den Gehäuseinnenraum des Gehäuses 1 und auch das Gehäuse 1 gegenüber dem Trägerelement 7 abzudichten, ist ein Dichtelement 29 vorgesehen, welches umlaufend an der unteren Außenkante der Bodenplatte 3 angeordnet ist. Dieses ringförmige Dichtelement 29 besteht aus einem ausreichend flexiblen, elastischen Dichtungsmaterial, beispielsweise aus einem Kunststoff wie Silikon.

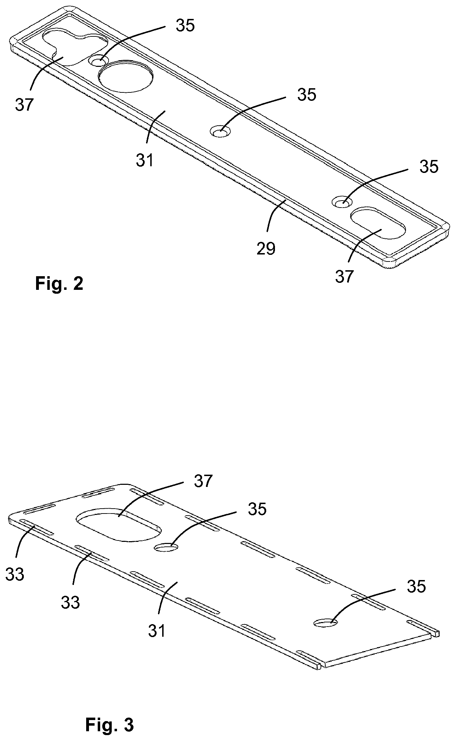

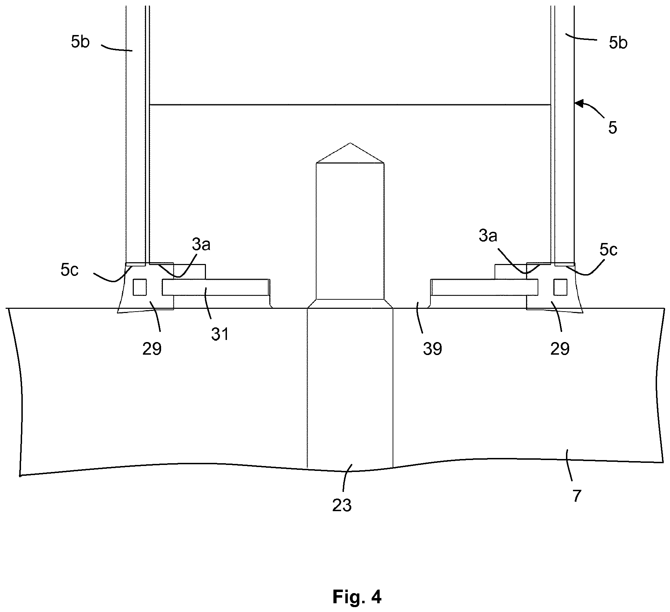

Das ringförmige Dichtelement 29 ist nicht wie bei bisher üblichen Gehäusen für eine Wägevorrichtung zwischen der Unterseite des Gehäuseoberteils und der Oberseite der Bodenplatte angeordnet, um lediglich eine Dichtwirkung zwischen diesen beiden Elementen zu erzeugen. Vielmehr ist das ringförmige Dichtelement 29, wie aus Fig. 2 ersichtlich, die einen vergrößerten Teilschnitt entlang der Ebene A-A in Fig. 1 darstellt, unterhalb des äußeren Randbereichs der Bodenplatte 3 angeordnet und dient zusätzlich auch der Abdichtung eines Raums innerhalb des ringförmigen Dichtelements 29 und unterhalb der Unterseite der Bodenplatte 3 gegen die Oberfläche des Trägerelements 7. Damit ist auch die Steckverbindung 25 bzw. ein Durchbruch für das Hindurchführen von elektrischen Leitungen in der Bodenplatte 3 gegenüber der Umgebung (oberhalb des Trägerelements 7) abgedichtet. Dies gilt selbstverständlich auch für alle anderen gegen Umwelteinflüsse zu schützenden Bestandteile des Gehäuses 1 bzw. der darin aufgenommenen Wägevorrichtung, die an der Unterseite der Bodenplatte 3 innerhalb des ringförmigen Dichtelements 29 vorgesehen oder über diese Gehäuseaußenfläche zugänglich sind.

Das umlaufende Dichtelement 29 ist, wie aus Fig. 24 ersichtlich, so ausgebildet, dass es mit seinem Querschnitt über den äußeren Umfang, das heißt die im Wesentlichen vertikal verlaufende Außenseite der Bodenplatte 3, hinausragt, so dass die untere, umlaufende Stirnseite 5c der Seitenwandung 5b im montierten Zustand des Gehäuses auf dem Trägerelement 7 ebenfalls die Oberseite des umlaufenden Dichtelements 29 beaufschlagt. Die Anpresskraft der Stirnseite 5c der Seitenwandung 5b ist dabei unter anderem abhängig von der Geometrie und dem Material des Dichtelements 29 und der Geometrie der Seitenwandung 5b.

Wird, wie bei der Ausführungsform in Fig. 2, ein Dichtelement 29 mit einem Querschnitt verwendet, dessen Oberseite im Wesentlichen eben ist und horizontal verläuft, so wird die Seitenwandung 5b vorzugsweise so ausgebildet, dass die untere Stirnseite 5c über die Unterseite 3a der Bodenplatte 3 im äußeren Randbereich der Bodenplatte 3 hinausragt. Hierdurch kann sichergestellt werden, dass auch im Bereich der Beaufschlagungsfläche der Stirnseite 5c des Dichtelements 29 durch das Dichtelement 29 eine Anpresskraft erzeugt wird, die zur Gewährleistung der Abdichtung ausreicht, selbst wenn die Unterseite 3a der Bodenplatte 3 den inneren Teil der horizontal verlaufenden Oberseite des ringförmigen Dichtelements 29 beaufschlagt und hierdurch das Dichtelement 29 auch im Bereich der Beaufschlagungsfläche der Stirnseite 5c bereits eine teilweise Deformation bzw. Kompression erfährt.

Damit wird eine sichere Abdichtung der Bodenplatte 3 gegenüber dem Trägerelement 7 erreicht, sowie des Weiteren eine sichere Abdichtung des Gehäuseoberteils 5 gegenüber der Bodenplatte 3 und damit eine sichere Abdichtung des Inneren des Gehäuses 1 gegenüber der Umgebung.

### Bezugszeichenliste

- 1: Gehäuse
- 3: Bodenplatte,
- 3a: Unterseite
- 5: Gehäuseoberteil
- 5a: Deckelwandung
- 5b: Seitenwandung
- 5c: untere Stirnseite
- 7: Trägerelement
- 9: Durchbruch
- 11: erstes Labyrinthdichtungsteil
- 12: zweites Labyrinthdichtungsteil
- 13: Ringraum
- 15: Rahmen
- 17: Strebe
- 19: Schraube
- 21: Bohrung
- 23: Schraube
- 25: Steckverbindung
- 27: Zugangsöffnung
- 29: Dichtelement
- 31: Trägerteil
- 38: Schraube
- 39: Flanschvorsprung

## Patentansprüche

1. Gehäuse für eine Wägevorrichtung, welches mit einem Trägerelement verbindbar ist,
(a) mit einer Bodenplatte (3), auf welcher die Wägevorrichtung montierbar ist oder welche mit der Wägevorrichtung oder einer Komponente der Wägevorrichtung einstückig ausgebildet ist,
(b) und mit einem mit der Bodenplatte (3) verbindbaren Gehäuseoberteil (5) mit einer Deckelwandung (5a) und einer umlaufenden Seitenwandung (5b),
(c) und mit einem von einer Dichtung (11, 12) abgedichteten Durchbruch (9) in der Wandung (5a, 5b) des Gehäuseoberteils (5) zur Durchführung eines Lastträgerarms,
**dadurch gekennzeichnet,**
(d) **dass** zur Montage des Gehäuseoberteils (5) ein Rahmen (15) mit der Bodenplatte (3) verbunden oder einstückig mit dieser ausgebildet ist, und
(e) **dass** das Gehäuseoberteil (5) mittels eines ersten Dichtungsteils (11) am Rahmen (15) fixiert ist.

2. Gehäuse nach Anspruch 1, **dadurch gekennzeichnet, dass** die Dichtung (11, 12) eine Labyrinthdichtung ist, wobei das erste Dichtungsteil als ein erstes Labyrinthdichtungsteil (11) ausgeführt und im Durchbruch (9) angeordnet ist.

3. Gehäuse nach Anspruch 1 oder 2, **dadurch gekennzeichnet, dass** der Rahmen mehrere Streben oder Rippen (17) umfasst.

4. Gehäuse nach einem der vorigen Ansprüche, **dadurch gekennzeichnet, dass** das erste Dichtungsteil (11) ein Gewinde aufweist, welches zur Befestigung des Gehäuseoberteils (5) in ein dazu komplementäres Gewinde im Rahmen (15) bzw. einer Strebe (17) des Rahmens (15) eingreift.

5. Gehäuse nach einem der vorigen Ansprüche, **dadurch gekennzeichnet, dass** das Gehäuseoberteil (5) auf den Rahmen (15), diesen übergreifend, aufgesetzt ist.

6. Gehäuse nach einem der vorigen Ansprüche, **dadurch gekennzeichnet, dass** das Gehäuseoberteil (5) mit seiner Deckelwandung (5a) durch die Fixierung mit dem ersten Dichtungsteil (11) gegen die Oberseite einer Strebe (17) des Rahmens (15) gepresst wird.

7. Gehäuse nach einem der vorigen Ansprüche, **dadurch gekennzeichnet, dass** der Rahmen (15) bzw. die Streben (17) durch eine Schraubverbindung mit der Bodenplatte (3) verbunden sind.

8. Waage mit einem Gehäuse nach einem der vorigen Ansprüche.

9. Verfahren zum Befestigen eines Waagengehäuses nach einem der Ansprüche 1 bis 7, umfassen folgenden Verfahrensschritt:
a) Aufsetzen des Gehäuseoberteils (5) auf den Rahmen (15);
b) Fixierung des Gehäuseoberteils (5) am Rahmen (15) mittels des ersten Labyrinthdichtungsteils (11).

10. Verfahren nach dem vorhergehenden Anspuch, **dadurch gekennzeichnet, dass** das ersten Labyrinthdichtungsteil (11) ein Gewinde aufweist, welches zur Fixierung des Gehäuseoberteils (5) in ein dazu komplementäres Gewinde im Rahmen (15) eingreift.

## Claims

1. Housing for a weighing device, which can be connected to a carrier element,
(a) having a base plate (3) on which the weighing device can be mounted or which is formed so as to be integral with the weighing device or a component of the weighing device,
(b) and having a housing upper portion (5), which can be connected to the base plate (3), with a cover wall (5a) and a circumferential side wall (5b),
(c) and having an opening (9), sealed by a seal (11, 12), in the wall (5a, 5b) of the housing upper portion (5) for the feedthrough of a load carrier arm,
**characterized**
(d) **in that**, to mount the housing upper portion (5), a frame (15) is connected to the base plate (3) or is formed so as to be integral with it, and
(e) **in that** the housing upper portion (5) is fastened to the frame (15) by means of a first seal portion (11).

2. Housing according to claim 1, **characterized in that** the seal (11, 12) is a labyrinth seal, wherein the first seal portion is designed as a first labyrinth seal portion (11) and is arranged in the opening (9).

3. Housing according to claim 1 or 2, **characterized in that** the frame comprises several struts or ribs (17).

4. Housing according to one of the preceding claims, **characterized in that** the first seal portion (11) has a thread which engages in a complementary thread in the frame (15) or a strut (17) of the frame (15) to secure the housing upper portion (5).

5. Housing according to one of the preceding claims, **characterized in that** the housing upper portion (5) is fitted on the frame (15), overlapping it.

6. Housing according to one of the preceding claims, **characterized in that** the housing upper portion (5) is pressed against the top of a strut (17) of the frame (15) with its cover wall (5a) through the fastening to the first seal portion (11).

7. Housing according to one of the preceding claims, **characterized in that** the frame (15) or the struts (17) are connected to the base plate (3) through a screw connection.

8. Weighing machine having a housing according to one of the preceding claims.

9. Method for securing a weighing machine housing according to one of claims 1 to 7, comprising the following method step:
a) fitting the housing upper portion (5) on the frame (15);
b) fastening the housing upper portion (5) to the frame (15) by means of the first labyrinth seal portion (11).

10. Method according to the preceding claim, **characterized in that** the first labyrinth seal portion (11) has a thread which engages in a complementary thread in the frame (15) to fasten the housing upper portion (5).

## Revendications

1. Boîtier destiné à un dispositif de pesage et pouvant être relié à un élément porteur,
(a) comportant une plaque de base (3) sur laquelle le dispositif de pesage peut être monté ou laquelle est formée d'un seul tenant avec le dispositif de pesage ou un composant du dispositif de pesage,
(b) et comportant une partie supérieure de boîtier (5) qui peut être reliée à la plaque de base (3) et qui comporte une paroi de couvercle (5a) et une paroi latérale circonférentielle (5b),
(c) et comportant un passage (9) étanchéifié par un joint (11, 12) dans la paroi (5a, 5b) de la partie supérieure de boîtier (5) pour le passage d'un bras porteur de charge,
**caractérisé en ce**
(d) **qu'**en vue du montage de la partie supérieure de boîtier (5), un cadre (15) est relié à la plaque de base (3) ou est formé d'un seul tenant avec celle-ci, et
(e) **que** la partie supérieure de boîtier (5) est fixée au cadre (15) au moyen d'une première partie de joint (11).

2. Boîtier selon la revendication 1, **caractérisé en ce que** le joint (11, 12) est un joint labyrinthe, la première partie de joint étant conçue comme une première partie de joint labyrinthe (11) et étant disposée dans le passage (9).

3. Boîtier selon la revendication 1 ou 2, **caractérisé en ce que** le cadre comprend plusieurs entretoises ou nervures (17).

4. Boîtier selon l'une des revendications précédentes, **caractérisé en ce que** la première partie de joint (11) présente un filetage, lequel vient en prise dans un filetage complémentaire dans le cadre (15) ou dans une entretoise (17) du cadre (15) afin de fixer la partie supérieure de boîtier (5).

5. Boîtier selon l'une des revendications précédentes, **caractérisé en ce que** la partie supérieure de boîtier (5) est placée sur le cadre (15) en le chevauchant.

6. Boîtier selon l'une des revendications précédentes, **caractérisé en ce que** la partie supérieure de boîtier (5) est pressée, avec sa paroi de couvercle (5a), contre le côté supérieur d'une entretoise (17) du cadre (15) en étant fixée avec la première partie de joint (11).

7. Boîtier selon l'une des revendications précédentes, **caractérisé en ce que** le cadre (15) ou les entretoises (17) sont reliés à la plaque de base (3) par une liaison de vissage.

8. Balance comportant un boîtier selon l'une des revendications précédentes.

9. Procédé de fixation d'un boîtier de balance selon l'une des revendications 1 à 7, comprenant les étapes de procédé suivantes :
a) placer la partie supérieure de boîtier (5) sur le cadre (15) ;
b) fixer la partie supérieure de boîtier (5) sur le cadre (15) au moyen de la première partie de joint labyrinthe (11).

10. Procédé selon la revendication précédente, **caractérisé en ce que** la première partie de joint labyrinthe (11) présente un filetage, lequel vient en prise dans un filetage complémentaire dans le cadre (15) afin de fixer la partie supérieure de boîtier (5).
